# EUROPÄISCHE PATENTANMELDUNG

(11) **EP 1 006 296 A2**
(43) Veröffentlichungstag der Anmeldung: **07.06.2000**
(21) Anmeldenummer: 99121820.7
(22) Anmeldetag: 04.11.1999
(51) Int. Cl.: F16H 59/10, B60K 41/22

(54) **Automatisiertes Drehmomentübertragungssystem mit vereinfachter Bedienung zur Änderung der Fahrtrichtung eines Kraftfahrzeuges**

(30) Priorität: 04.12.1998 DE 19855951
(71) Anmelder: Bayerische Motoren Werke Aktiengesellschaft, 80809 München (DE)
(72) Erfinder: Herger, Matthias, 82178 Puchheim (DE); Maurer, Michael, Dr., 80995 München (DE); Birzl, Willibald, 86668 Karlshuld (DE)

(57) **Zusammenfassung**

Automatisiertes Drehmomentübertragungssystem für Kraftfahrzeuge mit einem Antriebsmotor (12), einem dem Antriebsmotor zugeordneten Motorsteuergerät (10), einem dem Drehmomentübertragungssystem zugeordneten Aktuator (8), einer mit dem Motorsteuergerät (10) und dem Aktuator (8) verbundenen Steuereinheit (4) und einer mit der Steuereinheit verbundenen Befehlseinrichtung (2) zum Eingeben von zwei alternativen Schaltbefehlen (+,-) zur Verringerung oder Vergrößerung der Übersetzung des Drehmomentübertragungssystems. Zur Vereinfachung der Bedienung ist vorgesehen, daß der Aktuator (8) mit den beiden Schaltbefehlen ansteuerbar ist, um das Drehmomentübertragungssystem zur Änderung der Fahrtrichtung des Fahrzeugs umzuschalten.

## Beschreibung

Die Erfindung betrifft ein automatisiertes Drehmomentübertragungssystem für Kraftfahrzeuge mit einem Antriebsmotor, einem dem Antriebsmotor zugeordneten Motorsteuergerät, einem dem Drehmomentübertragungssystem zugeordneten Aktuator, einer mit dem Motorsteuergerät und dem Aktuator verbundenen Steuereinheit und einer mit der Steuereinheit verbundenen Befehlseinrichtung zum Eingeben von zwei alternativen Schaltbefehlen zur Verringerung oder Vergrößerung der Übersetzung des Drehmomentübertragungssystems.

Bei einem solchen automatisierten Drehmomentübertragungssystem braucht der Fahrer zur Verringerung oder Vergrößerung des Übersetzungsverhältnisses lediglich die Befehlseinrichtung zur Abgabe eines entsprechenden Schaltbefehls zu betätigen. Der eigentliche Schaltvorgang und die damit zusammenhängenden Vorgänge, z. B. die Verringerung der Zugkraft des Antriebs, das Auskuppeln, der Gangwechsel, das Einkuppeln und die Steigerung des Motormoments auf den Wert, der der aktuellen Fahrpedalstellung entspricht, erfolgt automatisch entsprechend einem in die Steuereinheit eingegebenen Programm.

Bei einer bekannten Bauart eines solchen automatisierten Drehmomentübertragungssystems besteht die Befehlseinrichtung aus einem Handschalthebel, der bei der Vorwärtsfahrt aus einer Mittelstellung zum Hoch- oder Rückschalten in zwei Stellungen bewegbar ist. Zum Einlegen des Rückwärtsganges muß der Handschalthebel in der Neutralstellung zunächst in Querrichtung und sodann in einer zu der ersten Bewegungsebene parallelen zweiten Bewegungsebene bewegt werden. Diese beiden Bewegungsebenen werden auch als Gassen bezeichnet. Wegen der langen Wege und der erforderlichen Richtungsänderung des Handschalthebels ist das Umschalten vom ersten Gang in den Rückwärtsgang und umgekehrt mit einem gewissen Zeitaufwand verbunden.

Bei einem anderen bekannten gattungsgemäßen automatisierten Drehmomentübertragungssystem besteht die Befehlseinrichtung aus zwei am Lenkrad angeordneten Betätigungstasten, die in Vorwärtsfahrt zum Hoch- oder Rückschalten des Getriebes wechselweise betätigbar sind. Zum Einlegen des Rückwärtsganges muß ein vom Lenkrad getrennt angeordnetes Betätigungselement, beispielsweise ein herkömmlicher Schalthebel, in die für Rückwärtsfahrt vorgesehene Stellung gebracht werden. Der Wechsel vom ersten Gang in den Rückwärtsgang und umgekehrt ist daher zeitaufwendig und mühsam. Dieser Nachteil macht sich insbesondere beim Einparken bemerkbar, wo das Getriebe mitunter wiederholt vom ersten Gang in den Rückwärtsgang umgeschaltet werden muß und umgekehrt.

Der Erfindung liegt die Aufgabe zugrunde, das gattungsgemäße automatisierte Drehmomentübertragungssystem dahingehend weiterzubilden, daß seine Bedienung für den Wechsel zwischen Vorwärts- und Rückwärtsfahrt und umgekehrt vereinfacht wird.

Erfindungsgemäß wird diese Aufgabe dadurch gelöst, daß der Aktuator mit den beiden Schaltbefehlen ansteuerbar ist, um das Drehmomentübertragungssystem zur Änderung der Fahrtrichtung des Fahrzeugs umzuschalten. Bei dem erfindungsgemäßen automatisierten Drehmomentübertragungssystem kann der Wechsel von Vorwärts- auf Rückwärtsfahrt und umgekehrt sehr rasch und einfach erfolgen, weil dies mit den gleichen beiden Schaltbefehlen möglich ist, die in der Vorwärtsfahrt zur Verringerung oder Vergrößerung des Übersetzungsverhältnisses benutzt werden.

Um ein versehentliches Umschalten des Drehmomentübertragungssystems auf Rückwärtsfahrt zu verhindern, ist gemäß einer Weiterbildung der Erfindung vorgesehen, daß dem Aktuator eine Signaleinrichtung zugeordnet ist und daß die Änderung der Fahrtrichtung des Fahrzeugs ein bestimmtes Signal voraussetzt. Diese Signaleinrichtung kann beispielsweise ein vom Fahrer betätigbarer Signalgeber sein. Bei einer besonders vorteilhaften Ausführungsform ist vorgesehen, daß die Signaleinrichtung ein von einer Geschwindigkeitsmeßeinrichtung gesteuerter Signalgeber ist. Auf diese Weise kann verhindert werden, daß das Drehmomentübertragungssystem nach Überschreiten einer bestimmten Geschwindigkeit des Kraftfahrzeuges von Vorwärts- auf Rückwärtsfahrt und umgekehrt umgeschaltet wird.

Die Befehlseinrichtung kann beispielsweise aus einem Handschalthebel bestehen, der zur Verringerung oder Vergrößerung der Übersetzung des Drehmomentübertragungssystems aus einer Mittelstellung in zwei Stellungen bewegbar ist. Bei dieser Ausführungsform der Befehlseinrichtung ist die Signaleinrichtung vorzugsweise eine am Handschalthebel angeordnete Betätigungstaste. Die Befehlseinrichtung kann aber auch aus zwei am Lenkrad angeordneten Betätigungstasten bestehen, die zum Eingeben der beiden Schaltbefehle wechselweise betätigbar sind.

Bei einer besonders vorteilhaften Ausführungsform der Erfindung ist vorgesehen, daß eine Entriegelungstaste vorgesehen ist, die gleichzeitig mit der Befehlseinrichtung betätigbar ist, um beim Umschalten des Drehmomentübertragungssystems von Vorwärts- auf Rückwärtsfahrt und umgekehrt die Neutralstellung zu überspringen, was einen sehr raschen Wechsel der Fahrtrichtung ermöglicht.

Ein bevorzugtes Ausführungsbeispiel der Erfindung ist in der Zeichnung dargestellt und wird nachfolgend näher erläutert. Es zeigt:
Fig. 1 ein Blockschaltbild des automatisierten Drehmomentübertragungssystems, und
Fig. 2 eine teilweise geschnittene Darstellung des oberen Bereichs eines Handschalthebels.

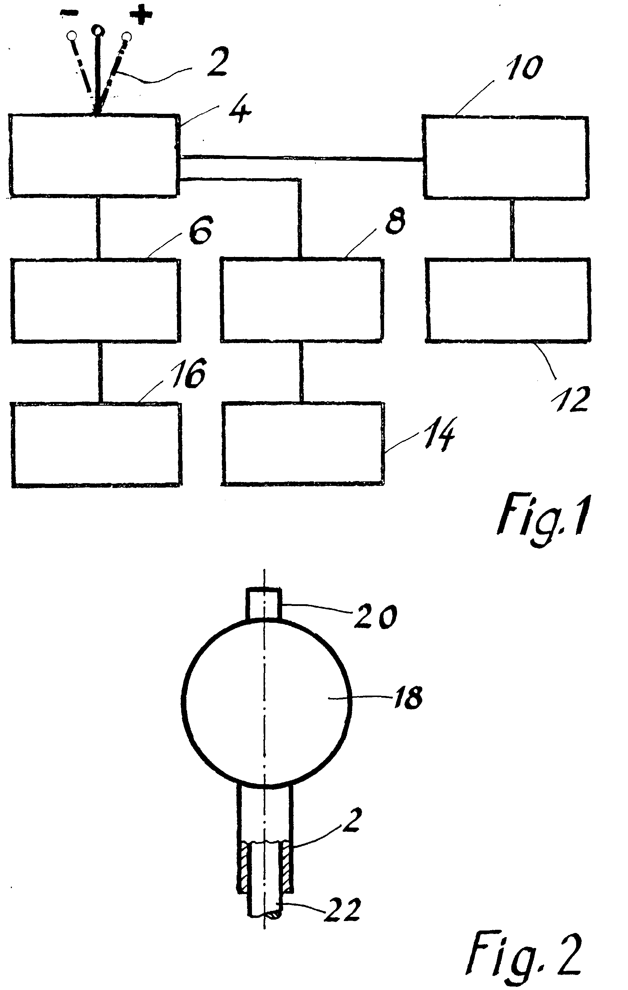

Wie aus Fig. 1 hervorgeht, umfaßt ein automatisiertes Drehmomentübertragungssystem eine mit einem Handschalthebel 2 versehene Steuereinheit 4. Die Steuereinheit 4 ist mit einem ersten Aktuator 6, einem zweiten Aktuator 8 und einem Motorsteuergerät 10 elektrisch verbunden. Das Motorsteuergerät 10 ist mit einem Verbrennungsmotor 12 bzw. dem sogenannten Motormanagement elektrisch verbunden, um das Drehmoment des Motors entsprechend den von der Steuereinheit 4 gelieferten Signalen zu steuern. Der zweite Aktuator 8 ist mit einem Drehmomentübertragungssystem 14 verbunden, um entsprechend den von der Steuereinheit 4 gelieferten Signalen die Getriebeübersetzung zu ändern. Der erste Aktuator 6 ist mit einer Kupplung 16 verbunden, um entsprechend den von der Steuereinheit 4 gelieferten Signalen den Kraftfluß vom Motor 12 zum Drehmomentübertragungssystem 14 zu unterbrechen.

Der Handschalthebel 2 kann aus einer Mittelstellung zum Hoch- oder Rückschalten des Getriebes 14 in entgegengesetzten Richtungen wahlweise in eine Schaltstellung "+" bzw. "-" bewegt werden. Wenn der Fahrer zum Hochschalten den Handschalthebel 2 aus der Mittelstellung in die Schaltstellung "+" bewegt, dann gibt die Steuereinheit 4 entsprechend dem eingegebenen Programm Steuersignale an den ersten Aktuator 6, den zweiten Aktuator 8 und an das Motorsteuergerät 10 ab. Das Motorsteuergerät 10 verringert daraufhin das Drehmoment des Motors 12, der erste Aktuator 6 öffnet die Kupplung 16 und der zweite Aktuator 8 betätigt das Drehmomentübertragungssystem 14, um den gewünschten Wechsel der Getriebeübersetzung vorzunehmen, d. h. um den nächst höheren Gang zu schalten. Daraufhin wird der erste Aktuator 6 von der Steuereinheit 4 angesteuert, um die Kupplung 16 wieder zu schließen, und das Motorsteuergerät 10 wird von der Steuereinheit 4 angesteuert, um das Drehmoment des Motors 12 auf den durch das Fahrpedal vorgegebenen aktuellen Wert zu bringen.

Das Herunterschalten des Getriebes erfolgt in analoger Weise, indem der Fahrer den Handschalthebel 2 aus der Mittelstellung in die Schaltstellung "-" bewegt.

Fährt der Fahrer beispielsweise im zweiten Gang und will in den ersten Gang wechseln, so bewegt er den Hebel in die dafür vorgegeben Richtung in die Stellung "-". Will er nun in den Leergang wechseln, so bewegt er den Hebel nochmals in die gleiche Richtung. Wenn der Fahrer jetzt in den Rückwärtsgang wechseln will, dann bewegt er den Hebel nochmals in die gleiche Richtung. Zum Umschalten des Getriebes vom ersten Gang in den Rückwärtsgang bewegt der Fahrer den Schalthebel zweimal in der entgegengesetzten Richtung in die Stellung "+", um nach Durchlaufen des Leerganges das Getriebe in den ersten Gang zu schalten. Da sich der Rückwärtsgang in der gleichen Ebene oder Gasse befindet, in der sich auch die Vorwärtsgänge befinden, kann der Wechsel zwischen Vorwärts- und Rückwärtsfahrt sehr rasch und einfach durchgeführt werden.

Um ein unbeabsichtigtes Einlegen des Rückwärtsganges zu verhindern können vom Fahrer weitere Aktionen verlangt werden, wie z. B. die Betätigung eines besonderen Signalgebers. Wie in Fig. 2 gezeigt, befindet sich am oberen Ende des Handschalthebels 2 ein Schaltknauf 18. Dem Schaltknauf 18 ist eine Betätigungstaste 20 zugeordnet, die mit einer im Schalthebel 2 axial verschiebbar gelagerten Stange 22 gekuppelt ist. Die Stange 22 ist ihrerseits mit der Steuereinheit 4 verbunden. Zum Einlegen des Rückwärtsganges muß der Fahrer den Handschalthebel 2 bei eingelegtem Leergang in die Stellung "-" bewegen und gleichzeitig die Betätigungstaste 20 drücken. Dadurch wird an den zweiten Aktuator 8 ein Signal geliefert, das Drehmomentübertragungssystem 14 in den Rückwärtsgang zu schalten.

Eine (nicht gezeigte) Sicherheitseinrichtung gegen das Einlegen des Rückwärtsganges oder auch des ersten Ganges, während sich das Fahrzeug in einem hierfür ungeeigneten Geschwindigkeitsbereich befindet, könnte darin bestehen, daß dem zweiten Aktuator ein Signalgeber zugeordnet ist, der von einer Geschwindigkeitsmeßeinrichtung gesteuert ist. Dieser Signalgeber würde das Umschalten des Getriebes vom ersten Gang in den Rückwärtsgang und umgekehrt verhindern, wenn die Vorwärtsgeschwindigkeit bzw. die Rückwärtsgeschwindigkeit des Fahrzeugs einen bestimmten Grenzwert überschreitet.

Zum direkten Wechsel vom ersten Gang in den Rückwärtsgang und umgekehrt kann eine besondere Entriegelungstaste vorgesehen sein. Diese Entriegelungstaste kann gleichzeitig mit dem Schalthebel betätigt werden, um den Leergang zu überspringen. Somit kann das Getriebe durch eine einmalige Betätigung des Schalthebels von Vorwärts- auf Rückwärtsfahrt umgeschaltet werden und umgekehrt. Diese Entriegelungstaste könnte beispielsweise von der in Fig. 2 gezeigten Betätigungstaste 20 gebildet sein. Wenn der Fahrer bei eingelegtem ersten Gang den Handschalthebel 2 in die Stellung "-" bewegt und gleichzeitig die Betätigungstaste 20 drückt, dann wird über die Steuereinheit 4 an den zweiten Aktuator 8 ein Signal geliefert, das Getriebe 14 unmittelbar in den Rückwärtsgang zu schalten. Auf analoge Weise kann das Getriebe 14 bei eingelegtem Rückwärtsgang unmittelbar in den ersten Gang umgeschaltet werden. Bei dieser Ausführungsform ist ein sehr rascher Wechsel der Fahrtrichtung möglich.

Wie aus der vorstehenden Beschreibung hervorgeht, läßt sich das automatisierte Drehmomentübertragungssystem zum Wechsel zwischen Vorwärts- und Rückwärtsfahrt sehr einfach und rasch bedienen, weil der Handschalthebel zu diesem Zweck nur in einer Ebene bewegt werden muß, was zugleich eine einfache Ausbildung seiner Führung ermöglicht.

Abweichend von dem gezeigten Ausführungsbeispiel könnte der Handschalthebel durch zwei am Lenkrad angeordnete Bedienungstasten ersetzt werden. Durch Drücken dieser Tasten wird ein Schaltbefehl erzeugt, der ein Hoch- oder Rückschalten des Getriebes bewirkt. Zum Umschalten des Getriebes von Vorwärts- auf Rückwärtsfahrt braucht der Fahrer lediglich zweimal die "-" Taste zu drücken, um das Getriebe vom ersten Gang über den Leergang in den Rückwärtsgang zu schalten. Umgekehrt kann das Getriebe durch zweimaliges Drücken der "+" Taste vom Rückwärtsgang in den ersten Gang umgeschaltet werden. Selbstverständlich können auch bei dieser Ausführungsform Sicherheitsmaßnahmen der vorstehend beschriebenen Art vorgesehen sein, um ein versehentliches Einlegen des Rückwärtsganges zu vermeiden.

### Bezugszeichenliste:

- 2: Handschalthebel
- 4: Steuereinheit
- 6: erster Aktuator
- 8: zweiter Aktuator
- 10: Motorsteuergerät
- 12: Verbrennungsmotor
- 14: Drehmomentübertragungssystem
- 16: Kupplung
- 18: Schaltknauf
- 20: Betätigungstaste
- 22: Stange

## Patentansprüche

1. Automatisiertes Drehmomentübertragungssystem für Kraftfahrzeuge mit einem Antriebsmotor, einem dem Antriebsmotor zugeordneten Motorsteuergerät, einem dem Drehmomentübertragungssystem zugeordneten Aktuator, einer mit dem Motorsteuergerät und dem Aktuator verbundenen Steuereinheit und einer mit der Steuereinheit verbundenen Befehlseinrichtung zum Eingeben von zwei alternativen Schaltbefehlen zur Verringerung oder Vergrößerung der Übersetzung des Drehmomentübertragungssystems, dadurch **gekennzeichnet**, daß der Aktuator (8) mit den beiden Schaltbefehlen ansteuerbar ist, um das Drehmomentübertragungssystem (14) zur Änderung der Fahrtrichtung des Fahrzeugs umzuschalten.

2. Automatisiertes Drehmomentübertragungssystem nach Anspruch 1, dadurch **gekennzeichnet**, daß dem Aktuator (8) eine Signaleinrichtung zugeordnet ist und daß die Änderung der Fahrtrichtung des Fahrzeugs ein bestimmtes Signal voraussetzt.

3. Automatisiertes Drehmomentübertragungssystem nach Anspruch 2, dadurch **gekennzeichnet**, daß die Signaleinrichtung ein vom Fahrer betätigbarer Signalgeber ist.

4. Automatisiertes Drehmomentübertragungssystem nach Anspruch 2, dadurch **gekennzeichnet**, daß die Signaleinrichtung ein von einer Geschwindigkeitsmeßeinrichtung gesteuerter Signalgeber ist.

5. Automatisiertes Drehmomentübertragungssystem nach einem der Ansprüche 1 bis 4, dadurch **gekennzeichnet**, daß die Befehlseinrichtung aus einem Handschalthebel (2) besteht, der aus einer Mittelstellung zum Hoch- oder Rückschalten in zwei Stellungen bewegbar ist.

6. Automatisiertes Drehmomentübertragungssystem nach Anspruch 3 und 5, dadurch **gekennzeichnet**, daß die Signaleinrichtung eine am Handschalthebel (2) angeordnete Betätigungstaste (20) ist.

7. Automatisiertes Drehmomentübertragungssystem nach einem der Ansprüche 1 bis 4, dadurch **gekennzeichnet**, daß die Befehlseinrichtung aus zwei am Lenkrad angeordneten Betätigungstasten besteht, die zum Eingeben der beiden Schaltbefehle wechselweise betätigbar sind.

8. Automatisiertes Drehmomentübertragungssystem nach einem der vorhergehenden Ansprüche, dadurch **gekennzeichnet**, daß eine Entriegelungstaste vorgesehen ist, die gleichzeitig mit der Befehlseinrichtung betätigbar ist, um beim Umschalten des Drehmomentübertragungssystems von Vorwärts- auf Rückwärtsfahrt und umgekehrt den Leergang zu überspringen.
